# EUROPEAN PATENT APPLICATION

(11) **EP 2 045 539 A1**
(43) Date of publication of application: **08.04.2009**
(21) Application number: 08165868.4
(22) Date of filing: 03.10.2008
(51) Int. Cl.: F24F 3/16, F16P 3/08

(54) **Screen for a containment booth**

(30) Priority: 05.10.2007 GB 0719474
(71) Applicant: Howorth Airtech Limited, Farnworth, Bolton BL4 7LZ (GB)
(72) Inventor: HIND, Graham Paul, Rishton, Lancashire BB1 4EN (GB)
(74) Representative: Manley, Nicholas Michael

(57) **Abstract**

A screen (20) for a downflow containment booth (20) comprising a protective screen (30) and support means (26) for adjusting the position of the screen (20), wherein the support means (26) has two or more degrees of freedom.

## Description

This invention relates to screens, and in particular, but without limitation to, protective screens for use in downflow isolators.

Downflow isolators, or downflow containment booths, are designed to provide protection to a worker during the handling of hazardous materials. Downflow isolators are often used where workers are exposed to particle and/or fume hazards.

The design of a downflow containment booth inhibits hazardous substances from ascending into the operator's breathing zone, primarily the space surrounding the worker's head and chest. This is achieved by forcing clean air vertically downwards through ceiling-mounted distribution screens into the vicinity of the worker/hazard, and extracting contaminated air at floor level through grilles located on the opposite side of the hazard area from the worker. By providing a continuous supply of clean air, and by continuously extracting contaminated air in a direction away from the hazard and worker, an improved air quality is achieved in the vicinity of the worker.

However, a downflow containment booth alone provides only a limited amount of protection to the worker, since rapidly-rising contaminants (e.g. smoke or powder plumes) can still enter the worker's breathing zone if they rise faster than the rate of downflow, as can sometimes happen if, for example, a drum of hazardous substance is dropped or agitated.

A greater degree of worker protection can be achieved by positioning a protective screen between the worker and the hazard. The screen serves two functions, namely to provide a physical barrier to airborne hazards moving towards the worker, and to separate the clean airflow above the worker into portions, which impinge separately on the worker and the hazard. Thus, the screen makes it more difficult for contaminants/contaminated air to enter the worker's breathing zone.

The screen is normally provided with glove ports to which protective gauntlets are sealingly connected into which the worker can place his/her hands to access and work with the hazardous substance.

Known downflow containment booth screens generally fall into three categories:
1. Flexible "curtains" suspended from the ceiling of the downflow containment booth around the hazard. This type of screen enables the worker to access the hazard, but suffers from the disadvantages of potentially creating an obstruction at floor level, reducing extraction efficiency by stalling the airflow at floor level and risk of entanglement with the worker and/or hazard;
2. Fixed, rigid screens manufactured from toughened glass or transparent plastics, which afford the worker a good view of the hazardous substance, but afford only limited access thereto; and
3. Moveable, rigid screens, also manufactured from toughened glass or transparent plastics, but which are arranged to slide along a ceiling-mounted rail. Movable screens afford the worker improved, albeit limited, access to the hazard, and since they are suspended above floor lever, do not significantly stall the airflow to the extractor.

It is an object of this invention to provide an improved screen for a downflow containment booth and/or to address one or more of the above problems.

According to a first aspect of the invention, there is provided a screen for a downflow containment booth, comprising a protective screen and support means for adjusting the position of the screen, wherein the support means has two or more degrees of freedom.

The screen is preferably suspended from the support means. Advantageously, this reduces the likelihood of stalling the airflow within the downflow containment booth at floor level, and reduces the risk of creating trip hazards. The screen may comprise means for securing the support means to the ceiling, or to an elevated portion, of the downflow containment booth.

The two or more degrees of freedom may comprise at least one translational movement. The two or more degrees of freedom may comprise translational movement in two non-parallel directions, and in particular, the two or more degrees of freedom may comprise translational movement in two orthogonal directions.

The mounting means may comprise first track means and first carriage means to which the screen is connected, the first carriage means being displaceable along the first track means. The first track means may be supported on second carriage means displaceable along second track means. The first track means may be further supported on third carriage means displaceable along third track means, which second and third track means may be substantially parallel. The second and third track means, where provided, may be substantially orthogonal to the first track means.

The two or more degrees of freedom comprise any one or more of: at least one rotational movement, at least one tilting movement, and at least one vertical movement.

The mounting means may comprise a rotatable mounting on which the screen is mounted, which rotatable mounting may comprise a bearing or a ball and socket connector.

Additionally or alternatively, the mounting means may comprise a pendant arm arranged to permit the screen to move with two or more degrees of freedom comprising any one or more of the group comprising: a translational movement; a rotational movement; and tilting movement; and a vertical movement.

The screen preferably comprises a support frame, the support frame being connected to the mounting means. Advantageously, this arrangement allows the screen to be removed for servicing and/or replacement. The support frame may also afford the screen greater rigidity, and weight, which latter property helps to move the screen more smoothly. The screen can be generally planar, although the screen may be curved and or have returns at or near its edges.

Ideally, the screen comprises one or more glove ports to enable a user to interact with objects on the opposite side of the screen to which he/she is standing. The or each glove port may comprise an annular connector for sealingly connecting a protective glove (e.g. a rubber gauntlet) to the periphery of the glove port.

The screen is preferably substantially transparent, although it may be tinted or comprise an optical filter to filter out harmful light emissions, e.g. laser, ultraviolet or infrared.

To afford the user the best possible protection against physical hazards, such as explosions etc, the screen is preferably manufactured of an impact resistant material, such as toughened glass or transparent plastics.

Advantageously, a glass screen does not attract static build-up, which can be problematic when handling powders, and/or when dealing with electrically sensitive or inflammable materials. Additionally, a glass screen retains its transparency better than a plastic screen, which can become increasingly opaque due to repeated washing with solvents.

According to a second aspect of the invention, there is provided a screen for a downflow containment booth, comprising a protective screen, carriage means upon which the protective screen is mounted, first track means along which the carriage means is displaceable and second track means on which the first track means is mounted and along which the first track means is displaceable.

The displacement of the carriage means along the first track means may be substantially perpendicular to the displacement of the first track means along the second track means. The screen may be rotatably and/or tiltably mounted on the carriage means.

According to a third aspect of the invention, there is provided a downflow containment booth comprising a screen for a downflow containment booth comprising a protective screen and support means for adjusting the position of the screen, wherein the support means has two or more degrees of freedom.

The downflow containment booth may have any one or more of the features described above.

Preferred embodiments of the invention shall now be described, by way of example only, with reference to the accompanying drawings, in which:
Figure 1 is a perspective view of an embodiment of downflow containment booth comprising a screen in accordance with the invention;
Figure 2 is schematic cross-section of Figure 1 on II-II;
Figure 3 is a schematic view of a second embodiment of screen in accordance with the invention; and
Figure 4 is a perspective view, partly cut away, of a modification which can be used with the first and second embodiments.

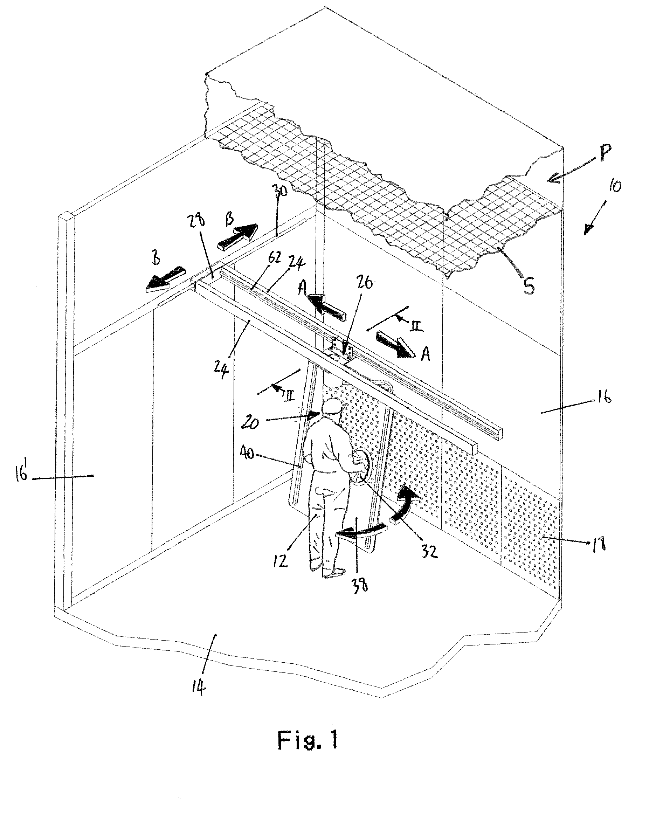

Figure 1 shows part of a downflow containment booth 10 comprising a floor 14 and front and side walls 16, 16' that together create an isolated workspace for the handling of hazardous substances. Another side wall would normally be positioned opposite the side wall 16', but has been omitted from Figure 1 for clarity. A worker 12 is able to work within the downflow containment booth and handle potentially harmful substances safely.

A constant supply of clean air is forced vertically downwards into the booth 10 through a distribution screen S forming part of an overhead plenum chamber P in the ceiling. Contaminated air is extracted at a low level through extraction grilles 18 located in the front wall 16 downstream of the worker 12 at floor level, in the conventional manner. Additional levels of safety are achieved by positioning a protective screen 20 between a worker 12 and the area in which the hazard is situated.

To enable the worker to move about and work comfortably within the booth 10, the protective screen 20 is suspended from a moveable, elevated support 22.

The elevated support 22 comprises a first pair of spaced-apart, parallel linear tracks 24 that span the width of the booth 10. The first pair of tracks 24 carry a first dolly 26 that is free to travel along the tracks 24 and thus traverse the width of the booth 10. The ends of the first tracks 24 are supported on second 28 and third (not shown) dollies that are arranged to travel along second 30 and third (not shown) wall-mounted tracks. The second 30 and third tracks are oriented at right angles to the first pair of tracks 24 to enable the first pair of tracks 24 and the first dolly 26 to approach and recede from the far wall 16 of the downflow containment booth 10.

The second 30 and third tracks are wall-mounted at a level below the height of the ceiling and distribution screen S. This arrangement enables clean air from the distribution screen S to flow downwardly on either side of the screen 20. The lower edge of the protective screen 20 is approximately 500mm above floor level so as not to disturb or stall the low-level airflow within the booth 10.

The protective screen 20 comprises a sheet of toughened glass 38 to afford the worker 12 both physical protection and a good view of the working area of the booth 10. The protective screen 20 has a pair of glove ports 32 therein, each having an annular connector 34 for sealingly connecting a rubber gauntlet 36 to the periphery of the port 32.

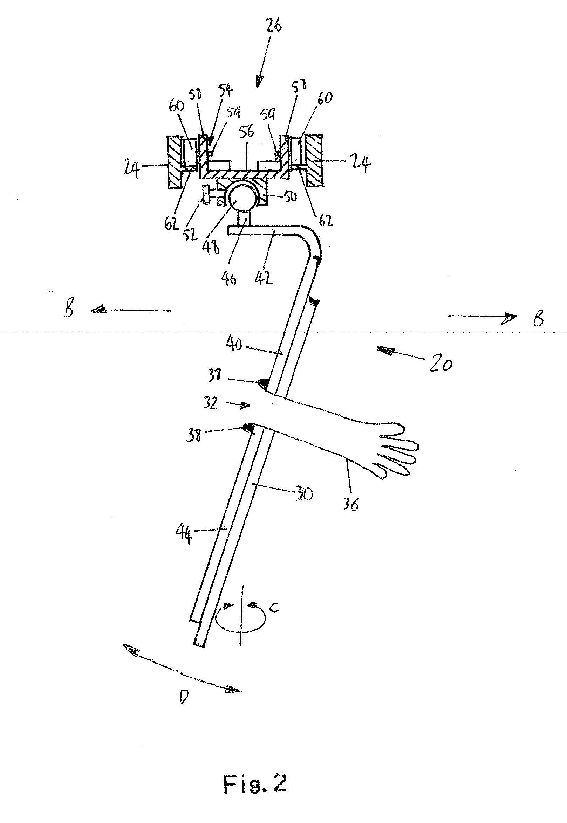

As can be seen best from Figure 2, the glass panel 38 is screwed to a tubular metal support frame 40. The support frame 40 comprises a pair of spaced-apart, elongate, parallel arms that each have an upper, horizontal portion 42, and a lower portion 44 that is inclined at about fifteen degrees to the vertical.

The upper portion 42 of the support frame is rigidly connected to a stub axle 46, which is, in turn, connected to the ball 48 of a ball and socket connector.

The ball 48 engages a socket 50 which is rigidly connected to the underside of the first dolly 26. A plastic tensioning screw 52 is provided so that the worker 12 can adjust the friction of the ball and socket joint, and hence adjust the ease of movement of the screen 20 relative to the dolly 26.

The dolly 26 comprises a generally u-section member 54 having a base 56 below which the socket 50 is affixed, and a pair of spaced-apart upstanding ribs 58 having through apertures for carrying the axles 59 of four dolly wheels 60.

The pairs of dolly wheels 60 are aligned and are arranged to sit, and run along, the top of a rib 62 projecting horizontally from each of the first tracks 24. Since the dolly 26 simply sits atop the horizontally projecting ribs 62, it is possible to remove the screen simply by lifting it upwards and manoeuvring the screen to pass through the gap between the tracks 26.

By using this arrangement, the screen 20 can be translated left or right (as indicated by arrow A) along the first pair of tracks 24, translated forwards or backwards (as indicated by arrow B) along the second and third tracks, rotated about a vertical axis(as indicated by arrow C), or tilted (as indicated by arrow D).

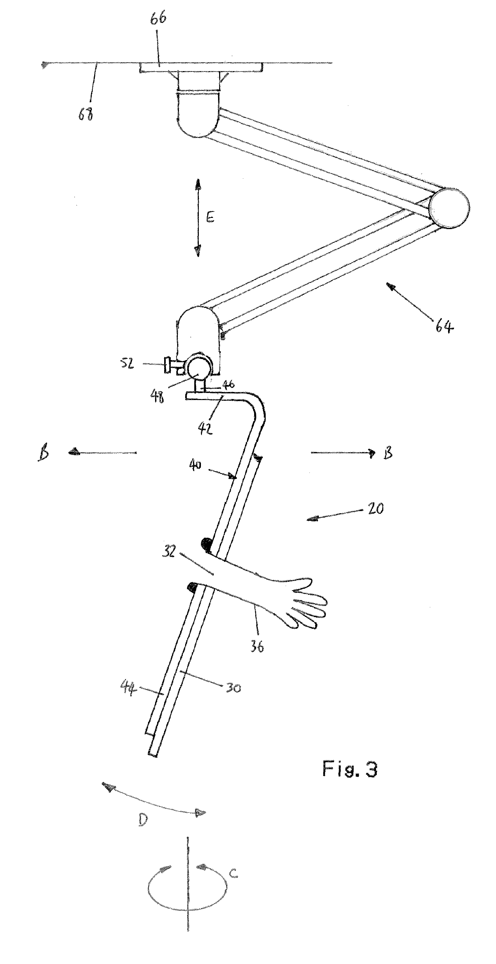

An alternative arrangement is shown in Figure 3, which is identical to that of the first embodiment, but is supported on ceiling-mounted pendant arm 64 rather than on a dolly. The pendant arm 64 comprises a mounting plate 66, which is bolted to the ceiling 68 of the downflow containment booth 10. The pendant arm is of known construction, and permits the screen to be translated left or right, translated forwards or backwards (as indicated by arrow B), rotated (as indicated by arrow C) about a vertical axis, or raised and lowered (as indicated by arrow E). Tilting of the screen 20 (as indicated by arrow D) can be effected using the ball and socket connector 48, 50 as previously described.

The invention is not limited to the details of the foregoing embodiments. For example, the screen need not be flat, and more, or fewer, than two glove ports may be provided therein. The ball and socket connector shown in Figures 2 and 3 could be replaced by a simple bearing to enable the screen to rotate about an axis, but not to tilt.

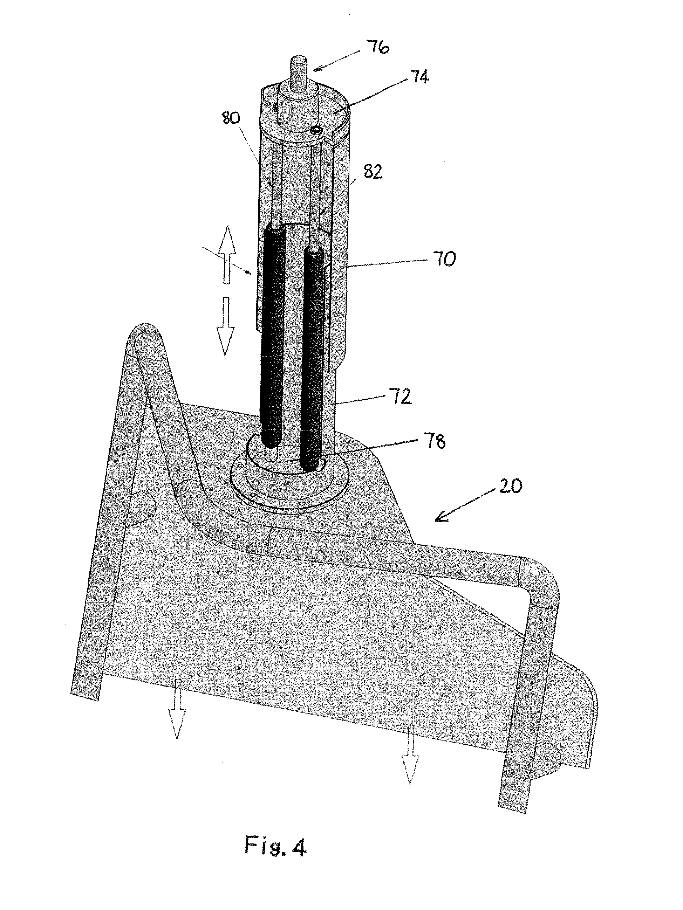

Fig. 4 shows an alternative mounting for the screen 20 which can be used with either of the previous embodiments and which allows adjustment of the vertical position of the screen 20. The mounting comprises a first, outer tubular sleeve 70 within which an inner tubular sleeve 72 is slidably and telescopically received. The upper end of the outer sleeve is closed off by an upper mounting disc 74 which has a screw-threaded boss 76 extending from its outer face for connection to the ball 48 of the ball and socket connector of the first or second embodiments. Similarly, the lower end of the inner sleeve is closed off by a lower mounting disc 78 which is secured to the frame of the screen 20. A telescopic gas strut 80 and a telescopic gas-filled tension strut 82 extend between, and are secured to, the upper and lower mounting discs 74,78.

In use, the vertical position of the screen may be easily adjusted by raising or lowering it to the desired height. As the vertical position of the screen is adjusted, the gas strut 80 and tension strut 82 adjust their length and are arranged such that they bear the weight of the screen and hold it in the chosen position. The telescopic upper and lower sleeves move with, and thereby protect, the gas strut 80 and tension strut 82.

## Claims

1. A screen for a downflow containment booth, comprising a protective screen and support means for adjusting the position of the screen, wherein the support means has two or more degrees of freedom.

2. A screen as claimed in claim 1, wherein the screen is suspended from the support means.

3. A screen as claimed in claim 1 or claim 2, comprising means for securing the support means to the ceiling, or to an elevated portion, of the downflow containment booth.

4. A screen as claimed in any of claims 1 to 3, wherein the two or more degrees of freedom comprise at least one translational movement.

5. A screen as claimed in any preceding claim, wherein the two or more degrees of freedom comprise translational movement in two non-parallel directions.

6. A screen as claimed in claim 5, wherein the two or more degrees of freedom comprise translational movement in two orthogonal directions.

7. A screen as claimed in any of claims 4 to 6, wherein the mounting means comprises first track means and first carriage means to which the screen is connected, the first carriage means being displaceable along the first track means.

8. A screen as claimed in any of claims 5 to 7, wherein the first track means is supported on second carriage means displaceable along second track means.

9. A screen as claimed in claim 8, wherein the first track means is further supported on third carriage means displaceable along third track means.

10. A screen as claimed in claim 9, wherein the second and third track means are substantially parallel.

11. A screen as claimed in claim 9 or claim 10, wherein the second and third track means are substantially orthogonal to the first track means.

12. A screen as claimed in any preceding claim, wherein the two or more degrees of freedom comprise at least one rotational movement.

13. A screen as claimed in any preceding claim, wherein the two or more degrees of freedom comprise at least one tilting movement.

14. A screen as claimed in claim 12 or claim 13, wherein the mounting means comprises a rotatable mounting on which the screen is mounted.

15. A screen as claimed in claim 14, wherein the rotatable mounting comprises a bearing or a ball and socket connector.

16. A screen as claimed in any preceding claim, wherein the two or more degrees of freedom comprises at least one vertical movement.

17. A screen as claimed in any of claims 1 to 4, or 12 to 16, wherein the mounting means comprises a pendant arm arranged to permit the screen to move with two or more degrees of freedom comprising any one or more of the group comprising: a translational movement; a rotational movement; and tilting movement; and a vertical movement.

18. A screen as claimed in any preceding claim, wherein the screen comprises a support frame, the support frame being connected to the mounting means.

19. A screen as claimed in any preceding claim, wherein the screen comprises one or more glove ports.

20. A screen for a downflow containment booth, comprising a protective screen, carriage means upon which the protective screen is mounted, first track means along which the carriage means is displaceable and second track means on which the first track means is mounted and along which the first track means is displaceable.

21. A screen as claimed in claim 20, wherein the displacement of the carriage means along the first track means is substantially perpendicular to the displacement of the first track means along the second track means.

22. A screen as claimed in claim 20 or claim 21, wherein the screen is rotatably and/or tiltably mounted on the carriage means.

23. A downflow containment booth comprising a screen as claimed in any of the preceding claims.
